(19) Europäisches Patentamt
European Patent Office
Office européen des brevets

(11) **EP 4 244 011 B1**

(12) **EUROPÄISCHE PATENTSCHRIFT**

(45) Veröffentlichungstag und Bekanntmachung des Hinweises auf die Patenterteilung:
**11.12.2024   Patentblatt 2024/50**

(21) Anmeldenummer: **21798625.6**

(22) Anmeldetag: **20.10.2021**

(51) Internationale Patentklassifikation (IPC):
*B23F 1/02* (2006.01)        *B23F 5/04* (2006.01)
*B23F 23/12* (2006.01)      *G05B 19/4065* (2006.01)
*B23Q 17/09* (2006.01)

(52) Gemeinsame Patentklassifikation (CPC):
**B23F 1/023; B23F 5/04; B23F 23/1218; G05B 19/4065**

(86) Internationale Anmeldenummer:
**PCT/EP2021/079111**

(87) Internationale Veröffentlichungsnummer:
**WO 2022/100972 (19.05.2022 Gazette 2022/20)**

(54) **VERFAHREN ZUM SCHLEIFEN EINER VERZAHNUNG ODER EINES PROFILS EINES WERKSTÜCKS**

METHOD FOR GRINDING A TOOTHING OR A PROFILE OF A WORKPIECE

PROCÉDÉ POUR MEULER UNE DENTURE OU UN PROFIL D'UNE PIÈCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.11.2020   DE 102020129930**

(43) Veröffentlichungstag der Anmeldung:
**20.09.2023   Patentblatt 2023/38**

(73) Patentinhaber: **Kapp Niles GmbH & Co. KG**
**96450 Coburg (DE)**

(72) Erfinder:
• **GÖBEL, Christopher**
**96482 Ahorn (DE)**

• **GEILERT, Philip**
**96482 Ahorn (DE)**
• **THIERFELDER, Sven**
**96268 Mitwitz (DE)**

(74) Vertreter: **Gosdin, Carstensen & Partner**
**Patentanwälte Partnerschaftgesellschaft mbB**
**Adam-Stegerwald-Straße 6**
**97422 Schweinfurt (DE)**

(56) Entgegenhaltungen:
**EP-A1- 1 195 668        WO-A1-2020/193228**
**JP-A- 2010 257 010    US-A- 3 809 870**

**Beschreibung**

Die Erfindung betrifft ein Verfahren zum Schleifen einer Verzahnung oder eines Profils eines Werkstücks mittels eines Schleifwerkzeugs in einer Schleifmaschine, wobei das Schleifwerkzeug auf einer Werkzeugspindel aufgenommen ist und die Werkzeugspindel mittels eines ersten Antriebsmotors gedreht wird, wobei das Werkstück auf einer Werkstückspindel aufgenommen ist und die Werkstückspindel mittels eines zweiten Antriebsmotors gedreht wird, wobei zumindest während des Eingriffs des Schleifwerkzeugs in die zu schleifende Verzahnung oder in das zu schleifende Profil ein erster und ein zweiter Maschinenparameter gemessen wird und beide gemessenen Maschinenparameter oder eine vom Maschinenparameter abgeleitete Größe mit einem vorgegebenen gespeicherten Wert verglichen wird, wobei ein Signal ausgegeben wird, falls mindestens einer der Maschinenparameter oder die hiervon abgeleitete Größe unter Berücksichtigung eines Toleranzbandes den vorgegebenen gespeicherten Wert über- oder unterschreitet.

Ein solches Verfahren gemäß dem Oberbegriff des unabhängigen Anspruchs 1 ist aus der WO 2020/193228 A1 bekannt. Hier wird eine Überwachung der beschriebenen Art durchgeführt, um erkennen zu können, ob es bei einer Schleifschnecke zu einem Schleifscheibenausbruch gekommen ist, wobei im gegebenen Falle ein Warnindikator ausgegeben wird, der eine unzulässige Prozessabweichung anzeigt.

Bei der Überwachung des Schleifprozesses ist es generell bekannt, einen relevanten Prozessparameter, beispielsweise die Stromaufnahme des Motors, welcher die Schleifspindel antreibt, zu beobachten und zu prüfen, ob der Wert über den Verlauf eines Schleifhubs innerhalb eines vorgegebenen Toleranzbandes liegt, welches sich naturbedingt über den Verlauf des Schleifhubs ändert. Verlässt der Wert das Toleranzband, wird ein Signal ausgegeben, welches auf einen nicht ordnungsgemäßen Zustand des Prozesses schließen lässt. Das festgelegte Toleranzband kann insofern als Wertebereich verstanden werden, welches vom System "eingelernt" wurde und auf Erfahrungswerte der Vergangenheit zurückgreift. Zum diesbezüglichen Stand der Technik wird auf die Werkzeugüberwachung der Nordmann GmbH & Co. KG, Hürth, DE, hingewiesen (s.: https://www.nordmann.eu/ huellkurven.html).

Zwar ist es hiermit möglich, über den Verlauf des Schleifprozesses eine Aussage zu gewinnen, insbesondere unter dem Gesichtspunkt, ob ein ordnungsgemäßes Teil geschliffen wurde. Allerdings hat sich herausgestellt, dass dies in vielen Fällen nicht ausreicht, um eine hinreichende Aussage über den Verlauf des Schleifprozesses sowie die Qualität des geschliffenen Teils treffen zu können. Insbesondere ist es schwierig, Rückschlüsse auf die Fehlerursache zu ziehen, sofern kein ordnungsgemäßer Schleifprozess vorlag.

Der Erfindung liegt die **Aufgabe** zugrunde, ein gattungsgemäßes Verfahren so weiterzuentwickeln, dass es möglich ist, durch Überwachung relevanter Größen verbessert auf den Verlauf des Schleifprozesses zu schließen. So soll verbessert beurteilt werden können, ob ein ordnungsgemäßes Teil geschliffen wurde. Gegebenenfalls sollen auch Hinweise darauf ableitbar werden, aufgrund welcher Probleme der Schleifprozess nicht ordnungsgemäß verlief. Somit besteht ein Ziel der vorliegenden Erfindung in einer prozesssicheren Überwachung des Schleifprozesses und einer möglichst vollständigen Überwachung der Werkstückqualität, was schnell und kostengünstig und somit ohne nachgelagerte externe Messung des geschliffenen Teils, insbesondere des Zahnrades, möglich werden soll.

Die Lös u n g dieser Aufgabe durch die Erfindung sieht vor, dass mindestens einer der Maschinenparameter oder die von diesem Maschinenparameter abgeleitete Größe periodische Signalanteile beinhaltet, wobei diese Signalanteile durch eine Frequenzanalyse in die einzelnen Frequenzanteile zerlegt werden und die Frequenzanteile hinsichtlich ihrer Frequenz und/oder ihrer Amplitude zum Vergleich herangezogen werden.

Bevorzugt beinhalten beide Maschinenparameter oder die von diesen Maschinenparametern abgeleiteten Größen periodische Signalanteile.

Vorzugsweise werden die Frequenzanteile nur hinsichtlich ihrer Amplitude zum Vergleich herangezogen.

Gemäß einer bevorzugten Vorgehensweise ist vorgesehen, dass die Frequenzanalyse mittels einer Fast-Fourier-Transformation (FFT) erfolgt.

Es können hierzu allerdings auch alternative und an sich bekannte Verfahren herangezogen werden, insbesondere eine Diskrete Fourier-Transformation (DFT), eine Root-Mean-Square-Analyse (Bestimmung des RMS-Spektrums), eine Bestimmung des Amplituden-Spektrums, eine Cepstrum-Analyse, eine Ausgleichssinusfunktion oder eine Ermittlung des Autoleistungsspektrums (PSD-Analyse). Die genannten Verfahren zur Signalanalyse sind als solche bekannt und müssen daher hier nicht näher besprochen werden.

Die Messung des ersten und des zweiten Maschinenparameters kann dabei während eines vorgegebenen Zeitintervalls während des Schleifens des Werkstücks mit dem Schleifwerkzeug erfolgen.

Möglich ist es auch, dass die Messung des ersten und des zweiten Maschinenparameters über einen vorgegebenen Vorschubweg beim Schleifen des Werkstücks mit dem Schleifwerkzeug erfolgt. Die genannten Parameter (insbesondere die Schleifleistung der Werkzeugspindel) wird hiernach also nicht zeitlich, sondern örtlich (über den Verlauf des Schleifhubs) betrachtet. Damit ist es möglich, besonders relevante Abschnitte zu betrachten und Vergleiche mit bereits abgespeicherten Daten anzustellen.

Der erste Maschinenparameter ist gemäß einer bevorzugten Ausführungsform der Erfindung die Stromaufnahme des Motors der Werkzeugspindel ist. Der zweite Maschinenparameter ist bevorzugt die Stromaufnahme des Motors der Werkstückspindel.

Was die Leistungs- oder Stromaufnahme des Werkzeugmotors anbelangt, ist nach einer Weiterbildung der Erfindung vorgesehen, dass vom Verlauf der gesamten Stromaufnahme des Motors der Verlauf der Stromaufnahme abgezogen wird, die sich bei einem Schleifhub ohne Zerspanung von Material ergibt (bzw. bei der Durchführung nur eines Schlichthubs, der nur vergleichsweise wenig Energie verbraucht). Insofern wird also bei dieser Vorgehensweise nicht die gesamte Spindelleistung betrachtet, sondern nur die Zerspanleistung. Von der Gesamtleistungsaufnahme wird also der Anteil abgezogen, der sich bei einem Leerhub (bzw. bei einem Schlichthub) ergibt.

Beim Leerhub (bzw. beim Schlichthub) wird nur die Verlustleistung erfasst, wie sie beispielsweise durch die Lager der Achsen hervorgerufen wird oder durch hydrodynamische Verluste infolge des Kühlschmiermittels.

Wenn hier von der Stromaufnahme (I) der Motoren gesprochen wird, ist hier natürlich auch die aufgenommene Leistung (P) der Motoren gemeint, was über die Beziehung

$$P = \bar{p} = \frac{1}{T} \int_{t_0}^{t_0+T} u \cdot i \, \mathrm{d}t$$

bei anliegender Spannung U gegeben ist.

Einer der erfassten Maschinenparameter kann auch der Körperschall der Schleifmaschine oder eines Teils derselben sein, wobei der Körperschall über einen Körperschallsensor erfasst wird.

Eine Alternative sieht vor, dass die vom Maschinenparameter abgeleitete Größe die Zerspanungsenergie pro Volumen (gemessen in $J/mm^3$) ist, die zum Zerspanen eines vorgegebenen Volumens des abzutragenden Aufmaßes auf der Verzahnung oder auf dem Profil benötigt wird. Über die Leistungs- bzw. Stromaufnahme der Werkzeugspindel kann für eine definierte Zeit die aufgenommene Energie ermittelt werden, die (insbesondere nach Abzug der Anteile, die nicht auf die Zerspanung zurückgehen, s. oben) für das Zerspanen von Aufmaß benötigt wird. Unter Berücksichtigung der Geometrie des Werkzeugs (Schleifschnecke) und der Verzahnung bzw. des Profils sowie der Prozessparameter (insbesondere der Zustellung des Werkzeugs auf das Werkstück) kann dann das entsprechende zerspante Volumen ermittelt werden. Mit dem genannten Parameter der Zerspanungsenergie pro Volumen wird die Übertragbarkeit zwischen verschiedenen Schleifprozessen (insbesondere Wälzschleifprozessen) bei unterschiedlichen Werkstücken erleichtert.

Aus den gemessenen Maschinenparametern und/oder aus der vom Maschinenparameter abgeleiteten Größe kann ein Kennwert ermittelt und ausgegeben werden, der den Schleifprozess für das geschliffene Werkstück charakterisiert.

Das Schleifwerkzeug ist bevorzugt eine Schleifschnecke und das Werkstück ein Zahnrad.

Das vorgeschlagene Konzept sieht insofern eine Überwachung und Bewertung des Schleifprozesses, insbesondere des Wälzschleifprozesses, durch Kombination mehrerer Signale vor, wobei mindestens zwei unterschiedliche Prozessparameter betrachtet werden. Für jedes geschliffene Werkstück kann ein Kennwert definiert werden, der Aufschluss über den durchgeführten Schleifprozesses gibt.

Die beschriebene Vorgehensweise überwacht den Schleifprozess effektiv und erkennt fehlerhafte bzw. auffällige Bauteile frühzeitig. Dabei werden insbesondere Fehler am Rohteil des Werkstücks, Welligkeiten auf den Flanken des geschliffenen Zahnrads und auch Werkzeugfehler erkannt.

Die Beurteilung erfolgt durch Rückgriff auf (in der Maschinesteuerung) gespeicherte Daten und somit eingelernte Erkenntnisse aus früheren Schleifprozessen. Prozessabweichungen (Anomalien) können so verbessert erkannt werden, so dass dem Maschinenbediener ein Warnhinweis gegeben oder der Schleifprozess abgebrochen werden kann.

Während der Bearbeitung werden gegebenenfalls mehrere steuerungsinterne Signale (d. h. solche, die in der Maschinensteuerung vorhanden sind) und auch steuerungsexterne Signale (beispielsweise erfasst über Sensoren, die Körperschall aufnehmen, die beispielsweise vom Maschinenbett oder vom Hallenboden herrühren) aufgenommen und berücksichtigt.

Zusätzlich können maschineninterne Daten (wie beispielsweise eingestellte Korrekturen, der Durchmesser der Schleifschnecke, generierte Bahnen, entlang derer das Werkstück und das Werkzeug relativ zueinander geführt werden) verwendet werden, um diese zur Beurteilung des Prozesses zu verwenden, wozu diese gegebenenfalls adaptiv gefiltert und einsortiert werden (beispielsweise durch eine Unterteilung des gesamten Schleifvorgangs in verschiedene Hübe, Unterteilung in Einlauf, Auslauf und vollständigen Eingriff von Werkstück und Werkzeug).

Abhängig von den Einflussgrößen auf den Prozess, insbesondere mit Blick auf die generierte Bahn (beeinflusst durch Schneckendurchmesser und Korrekturen), können Kennwerte berechnet und ausgegeben werden.

Zusätzlich zu den vorbekannten Verfahren (s. oben) können aus den einzelnen erfassten Signalen Kennwerte für die genannte Unterteilung (statistische Kennwerte, wie z. B. Standardabweichung, Varianz, Kurtosis, Skewness, Häufigkeitsverteilungen, Einordnung in Perzentilen, Steigung, Flächeninhalte) ermittelt werden; dies gilt auch für die Ermittlung von Kennwerten aus der Signalanalyse (wie z. B. Frequenz, Amplitude, Ordnungsanalyse).

Für eine Allgemeingültigkeit der ermittelten Daten für unterschiedliche Schleifprozesse und somit für die Übertragbarkeit können die genannten Kennwerte normiert werden. Hierzu werden beispielsweise das bezogene Zeitspanvolumen, die bezogene Schleifleistungen, die bezogene Schnittkraft sowie die Kontaktzeit zwischen Werkstück und Werkzeug herangezogen.

Über die Kombination der verschiedenen Kennwerte, die aus den diversen Sensorsignalen gewonnen wurden, entstehen Informationen über den Schleifprozess.

Mit Hilfe von Algorithmen aus der Statistik und insbesondere mit Algorithmen aus dem Bereich des maschinellen Lernens werden diese Daten ausgewertet und hierdurch die Qualität des Bearbeitungsprozesses bestimmt. Die an sich bekannten Algorithmen aus dem Bereich des maschinellen Lernens beinhalten sowohl überwachtes als auch unüberwachtes Lernen, "Deep Learning" und "bestärkendes Lernen".

Somit wird es möglich, die Überwachungsqualität zu erhöhen und damit den Schleifprozess zu stabilisieren. Es kann in verbesserter Weise erkannt werden, ob es sich um einen fehlerhaften Prozess handelt, wobei auch die Art des Fehlers verbessert identifiziert werden kann. Die Voraussetzung hierfür ist, dass bei den (in der Maschinensteuerung) hinterlegten Daten ein solcher oder ein ähnlicher Fehler eingelernt wurde.

Neben der Erkennung des Fehlerfalls ist damit auch eine schnellere Fehlerbehebung möglich. Aufbauend auf diesem Wissen ist die Maschine in der Lage, adaptiv in den Prozess einzugreifen und diesen zu optimieren.

Wie erwähnt, können die Messsignale im Prozess auf der Basis von Erkenntnissen über den Schleifprozess in Bereiche unterteilt werden, die für die Bewertung des Prozesses aussagekräftig sind. Es wird somit nicht zwingend der gesamte Bearbeitungsprozess beurteilt, sondern nur relevante Bereiche.

Die vorgeschlagene Vorgehensweise überwacht somit den Schleifprozess und beurteilt diesen indexbasiert. Das bedeutet, dass für jedes einzelne Werkstück ein Index, also ein Zahlenwert berechnet, wird, der die Qualität des Schleifprozesses beurteilt. Diese Indexwerte können dann dem Maschinenbediener als Verlaufsdiagramm zur Verfügung gestellt werden, so dass dieser sich leicht einen Überblick über den erfolgten Schleifprozess machen kann. Zur Ermittlung des genannten Index können mehrere Kennwerte verwendet werden. Diese Kennwerte beurteilen dann auf unterschiedliche Weise den Schleifprozess, den Abrichtprozess und das Ausrichten des Werkstücks in der Schleifmaschine. Fehler können somit frühzeitig erkannt werden, die ansonsten erst im Messraum oder gar nicht erkannt werden. Hierzu gehören Fehler wie Rohteilfehler oder Rüstfehler.

Zusätzlich ist es möglich, gezielte Meldungen zu den Unregelmäßigkeiten auszugeben, wenn diese im Algorithmus eingelernt sind. Somit kann eine Optimierung des Prozesses und somit das Abstellen eines Fehlers gezielt und zeitsparend erfolgen.

Die im konkreten Schleifprozess erfassten Daten werden mit solchen verglichen, die in einer Datenbank hinterlegt sind. Somit können beispielsweise bestimmte Prozesssignale bestimmten Bereichen der Schleifschnecke zugeordnet werden; entsprechend können beispielsweise Signale bestimmten Schneckendurchmessern und dazugehörigen Drehzahlen der Schleifschnecke zugeordnet werden.

In der Zeichnung sind Ausführungsbeispiele der Erfindung dargestellt.

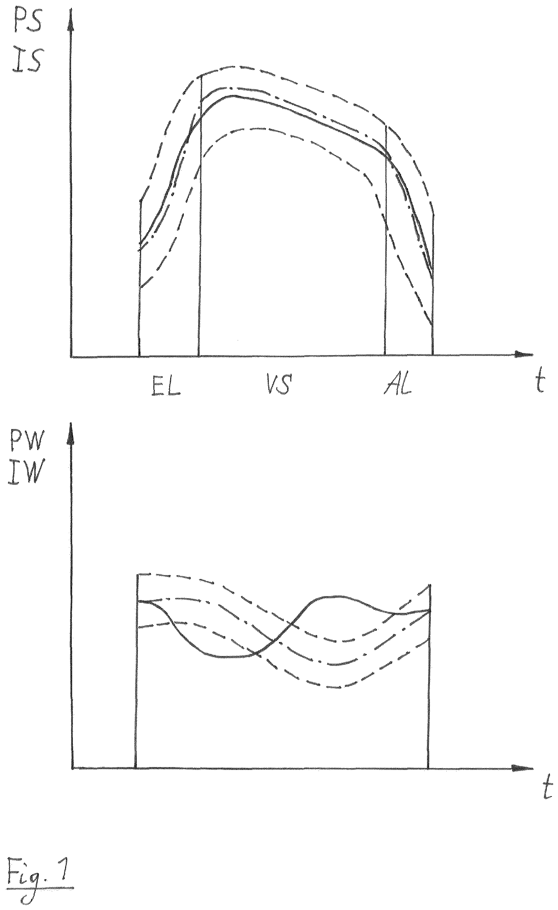

Fig. 1    zeigt zunächst in allgemeiner Weise für einen ersten Schleifprozess in der oberen Abbildung den Verlauf der Leistungsaufnahme bzw. der Stromaufnahme des Motors, der die Schleifspindel antreibt, und in der unteren Abbildung den Verlauf der Leistungsaufnahme bzw. der Stromaufnahme des Motors, der die Werkstückspindel antreibt, und

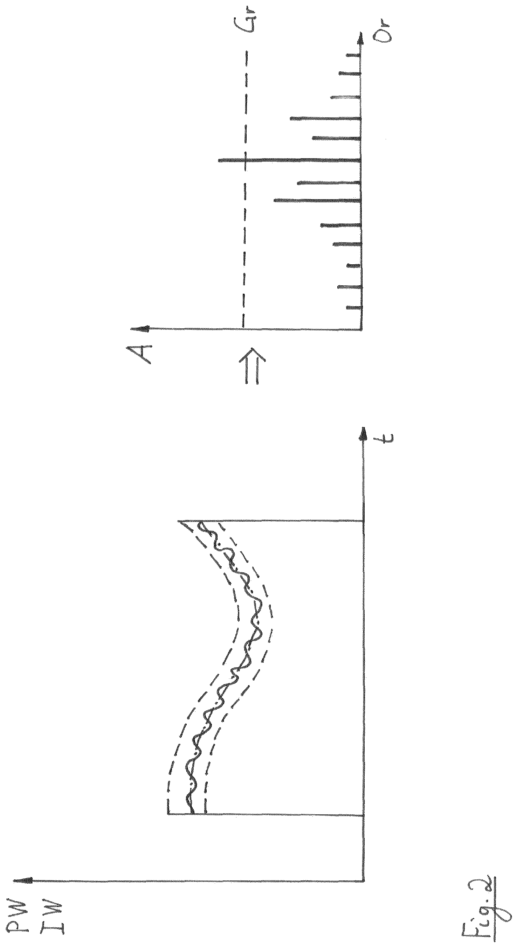

Fig. 2    zeigt gemäß einer Ausgestaltung des erfindungsgemäßen Verfahrens für einen zweiten Schleifprozess in der linken Abbildung den Verlauf der Leistungsaufnahme bzw. der Stromaufnahme des Motors, der die Werkstückspindel antreibt, und in der rechten Abbildung die aus einer Fast Fourier Transformation (FFT) gewonnenen Amplituden der Frequenzanteile eines periodischen Verlaufs der Leistung bzw. des Stroms.

In Figur 1 ist der Verlauf der Leistungen P bzw. Stromstärken I über der Zeit t aufgetragen, der sich für einen Motor für den Antrieb einer Schleifspindel (S) sowie für den Motor für den Antrieb einer Werkstückspindel (W) in einer Verzahnungsschleifmaschine ergibt (dargestellt für einen Schrupphub, bei dem das Werkstück in Qualität geschliffen wird). Oben in Figur 1 ist der Verlauf der Leistung PS über der Zeit aufgetragen, wie sie vom Motor der Schleifspindel aufgenommen wird; über die anliegende Motorspannung ergibt sich entsprechend derselbe Verlauf für die Stromstärke IS des Motors.

Analoges gilt für die untere Darstellung in Figur 1, wo dieselbe Angabe für den Motor für den Antrieb der Werkstückspindel aufgetragen ist.

Der bei der Fertigung ordnungsgemäßer Zahnräder zu erwartende Verlauf der Leistungen bzw. Stromstärken ist mit der jeweiligen strichpunktierten Linie dargestellt. Mit gestrichelten Linien ist oberhalb bzw. unterhalb der strichpunktierten Linie dargestellt, welches Toleranzband für den Verlauf der Leistungen bzw. Stromstärken zulässig ist. Dabei ist mit EL der Bereich des Einlaufs einer Schleifschnecke in das zu schleifende Zahnrad markiert, mit VS der Vollschnitt, bei dem das eigentliche Schleifen erfolgt, und mit AL der Auslauf des Werkzeugs aus dem Werkstück.

Die ausgezogene Linie gibt an, wie der tatsächliche Verlauf der Leistungen bzw. Stromstärken beim Schleifen eines konkreten Werkstücks war.

Zu erkennen ist, dass für die Leistungs- bzw. Stromaufnahme an der Schleifspindel ein normaler Verlauf gegeben ist, der auf ein ordnungsgemäßes Schleifen schließen lassen würde. Tatsächlich ist dies jedoch nicht der Fall. Durch einen Flankenformfehler (namentlich durch eine entgegengesetzte Flankenlinienabweichung zwischen der rechten und der linken Zahnflanke) nimmt zwar die Schleifspindel den erwarteten Strom auf, nicht allerdings die Werkstückspindel, deren Leistungsaufnahme außerhalb des erwarteten Bereich liegt, wie es sich aus der unteren Darstellung in Figur 1 ergibt.

Es sei also darauf hingewiesen, dass abhängig von der Lage bzw. der Ausrichtung des Flankenformfehlers die Leistungsaufnahme bzw. Stromaufnahme an der Schleifspindel durchaus noch im zulässigen Toleranzband liegen kann, während erst die gleichzeitige Berücksichtigung der Leistungsaufnahme bzw. Stromaufnahme an der Werkstückspindel aufzeigt, dass es hier mit der Vorbearbeitung des Zahnrades Probleme gegeben hat und ein entsprechender Flankenformfehler vorliegt.

Vorgesehen ist beim vorliegenden Ausführungsbeispiel also generell, dass (zumindest) während des Eingriffs des Schleifwerkzeugs in die zu schleifende Verzahnung ein erster Maschinenparameter in Form der Leistung oder der Stromstärke der Werkzeugspindel sowie ein zweiter Maschinenparameter in Form der Leistung oder der Stromstärke der Werkstückspindel gemessen wird. Die beide gemessenen Maschinenparameter PS/IS, PW/IW werden mit einem vorgegebenen gespeicherten Wert verglichen. Ausweislich Figur 1 ist gemäß der unteren Teilfigur sofort festzustellen, dass der Verlauf der Leistung bzw. der Stromstärke das zulässige Toleranzband verlassen hat, so dass ein Warnsignal ausgegeben wird. Die Maschinesteuerung weist somit auf ein Problem beim Schleifen hin und dass möglicherweise kein Gut-Teil vorliegt.

In Figur 2 ist eine konkrete erfindungsgemäße Vorgehensweise dargestellt, wonach das genannte Verfahren hier konkret so ausgestaltet wurde, um verbessert Probleme während des Schleifprozesses sichtbar zu machen und eine entsprechende Warnmeldung ausgeben zu können.

In der linken Darstellung in Figur 2 ist wiederum die Leistungs- bzw. Stromaufnahme an der Werkstückspindel dargestellt (s. die ausgezogene Linie), die hier im zulässigen Toleranzband liegt. Allerdings ist auch zu erkennen, dass sich die Leistungs- bzw. Stromaufnahme periodisch verändert, d. h. sie weist den Verlauf einer überlagerten Schwingung auf.

Diese überlagerte Schwingung kann eine nachteilige Feinwelligkeit auf die Zahnflanke aufbringen, welche zu Geräuschen im Einsatz der Verzahnung führen können, dies ist insbesondere im Bereich der Elektromobilität sehr nachteilhaft.

Vorgesehen ist gemäß einer möglichen erfindungsgemäßen Ausgestaltung demnach hier, dass in Verfeinerungen der obigen Vorgehensweise eine vom Maschinenparameter (hier: von der Leistung- bzw. Stromaufnahme der Werkstückspindel) abgeleitete Größe betrachtet wird, um den Schleifprozess zu beurteilen bzw. bewerten.

Der aufgezeichnete Verlauf im linken Teilbild von Figur 2 wird einer Fast Fourier Transformation (FFT) unterzogen, um das periodische Signal in seine Bestandteile ("Harmonischen") zu zerlegen. Dies ist im rechten Teilbild in Figur 2 dargestellt. Hier ist die Amplitude A der einzelnen Frequenzanteile des erfassten periodischen Signals über der Ordnung Or schematisch aufgezeichnet. Zu erkennen ist, dass ein Frequenzanteil über einem Grenzwert Gr liegt, so dass darauf geschlossen werden kann, dass kein ordnungsgemäßer Schleifprozess stattgefunden hat.

Es sei darauf hingewiesen, dass die Darstellung in Figur 2 nur sehr schematisch ist und natürlich für jeden einzelnen Frequenzanteil, der sich aus der FFT ergibt, individuelle Grenzwerte festgelegt werden können. Hier kann insbesondere Expertenwissen eingehen, welches in der Maschinensteuerung gespeichert ist, um diese zu veranlassen, dass im gegebenen Falle ein Warnsignal ausgegeben wird.

Mit der vorgeschlagenen Vorgehensweise wird es insbesondere möglich, sehr schnell auf nicht ordnungsgemäße Prozessbedingungen hinweisen zu können, bevor möglicherweise eine komplette Charge an Werkstücken fehlerhaft produziert wurde. Damit können erheblich Kosten eingespart werden.

Natürlich können auch andere Parameter für die Überwachung des Prozesses herangezogen werden, wobei insbesondere an die Erfassung des Körperschalls der Maschine oder des Hallenbodens gedacht ist, die gleichermaßen insbesondere nach einer Analyse der aufgenommenen Signale (beispielsweise durch eine FFT) darüber Aussagen ermöglichen, wie der Schleifprozess verlaufen ist und ob zu erwarten ist, dass ein Gut-Teil geschliffen wurde.

Im Ausführungsbeispiel dargestellt ist der Einsatz einer FFT. Alternativ kann natürlich jedes andere an sich bekannte Verfahren zur Frequenzanalyse zum Einsatz kommen, wie insbesondere die Diskrete Fourier-Transformation (DFT), die Frequenzanalyse durch eine Root-Mean-Square-Analyse (Bestimmung des RMS-Spektrums), durch eine Bestimmung des Amplituden-Spektrums, durch eine Cepstrum-Analyse (einschließlich der Varianten, wie zum Beispiel Power-Cepstrum), durch eine Ausgleichssinusfunktion oder durch eine Ermittlung des Autoleistungsspektrums (PSD-Analyse). In der Messwertanalyse sind die beschriebenen Verfahren als solche sämtlich bekannt, so dass an dieser Stelle nicht näher auf sie eingegangen werden muss. Wesentlich ist lediglich, dass für die gemessenen periodischen Signalanteile durch eine Frequenzanalyse die einzelnen Frequenzanteile bestimmt und die hieraus ermittelten Ergebnisse für den Vergleich mit zulässigen Grenzwerten (insbesondere für die maximal zulässigen Größen der einzelnen Amplituden der "Harmonischen") herangezogen werden.

**Patentansprüche**

1. Verfahren zum Schleifen einer Verzahnung oder eines Profils eines Werkstücks mittels eines Schleifwerkzeugs in einer Schleifmaschine,

   wobei das Schleifwerkzeug auf einer Werkzeugspindel aufgenommen ist und die Werkzeugspindel mittels eines ersten Antriebsmotors gedreht wird,
   wobei das Werkstück auf einer Werkstückspindel aufgenommen ist und die Werkstückspindel mittels eines zweiten Antriebsmotors gedreht wird,
   wobei zumindest während des Eingriffs des Schleifwerkzeugs in die zu schleifende Verzahnung oder in das zu schleifende Profil ein erster und ein zweiter Maschinenparameter (PS, PW) gemessen werden und beide gemessenen Maschinenparameter (PS, PW) oder eine vom Maschinenparameter (PS, PW) abgeleitete Größe (A) mit einem vorgegebenen gespeicherten Wert verglichen werden, wobei ein Signal ausgegeben wird, falls mindestens einer der Maschinenparameter (PS, PW) oder die hiervon abgeleitete Größe (A) unter Berücksichtigung eines Toleranzbandes den vorgegebenen gespeicherten Wert über- oder unterschreitet,
   **dadurch gekennzeichnet,**
   **dass** mindestens einer der Maschinenparameter (PS, PW) oder die von diesem Maschinenparameter (PS, PW) abgeleitete Größe (A) periodische Signalanteile beinhaltet, wobei diese Signalanteile durch eine Frequenzanalyse in die einzelnen Frequenzanteile zerlegt werden und die Frequenzanteile hinsichtlich ihrer Frequenz und/oder ihrer Amplitude zum Vergleich herangezogen werden.

2. Verfahren nach Anspruch 1, **dadurch gekennzeichnet, dass** beide Maschinenparameter (PS, PW) oder die von diesen Maschinenparametern (PS, PW) abgeleiteten Größen (A) periodische Signalanteile beinhalten.

3. Verfahren nach Anspruch 1 oder 2, **dadurch gekennzeichnet, dass** die Frequenzanteile nur hinsichtlich ihrer Amplitude zum Vergleich herangezogen werden.

4. Verfahren nach einem der Ansprüche 1 bis 3, **dadurch gekennzeichnet, dass** die Frequenzanalyse mittels einer Fast-Fourier-Transformation (FFT) erfolgt.

5. Verfahren nach einem der Ansprüche 1 bis 3, **dadurch gekennzeichnet, dass** die Frequenzanalyse mittels einer Diskreten Fourier-Transformation (DFT) erfolgt.

6. Verfahren nach einem der Ansprüche 1 bis 3, **dadurch gekennzeichnet, dass** die Frequenzanalyse durch eine Root-Mean-Square-Analyse (Bestimmung des RMS-Spektrums) oder durch eine Bestimmung des Amplituden-Spektrums oder durch eine Cepstrum-Analyse oder durch eine Ausgleichssinusfunktion oder durch eine Ermittlung des Autoleistungsspektrums (PSD-Analyse) erfolgt.

7. Verfahren nach einem der Ansprüche 1 bis 6, **dadurch gekennzeichnet, dass** die Messung des ersten und des zweiten Maschinenparameters (PS, PW) während eines vorgegebenen Zeitintervalls während des Schleifens des Werkstücks mit dem Schleifwerkzeug erfolgt.

8. Verfahren nach einem der Ansprüche 1 bis 6, **dadurch gekennzeichnet, dass** die Messung des ersten und des zweiten Maschinenparameters (PS, PW) über einen vorgegebenen Vorschubweg beim Schleifen des Werkstücks mit dem Schleifwerkzeug erfolgt.

9. Verfahren nach einem der Ansprüche 1 bis 8, **dadurch gekennzeichnet, dass** der erste Maschinenparameter (PS) die Leistungs- oder Stromaufnahme des Motors der Werkzeugspindel ist.

10. Verfahren nach einem der Ansprüche 1 bis 9, **dadurch gekennzeichnet, dass** der zweite Maschinenparameter (PW) die Leistungs- oder Stromaufnahme des Motors der Werkstückspindel ist.

11. Verfahren nach Anspruch 9 oder 10, **dadurch gekennzeichnet, dass** vom Verlauf der gesamten Leistungs- oder Stromaufnahme des Motors der Verlauf der Leistungs- oder Stromaufnahme abgezogen wird, die sich bei einem Schleifhub ohne Zerspanung von Material oder nur bei geringer Zerspanung in einem Schlichtschleifhub ergibt.

12. Verfahren nach einem der Ansprüche 1 bis 8, **dadurch gekennzeichnet, dass** einer der Maschinenparameter der Körperschall der Schleifmaschine oder eines Teils derselben ist, der über einen Körperschallsensor erfasst wird.

13. Verfahren nach einem der Ansprüche 1 bis 11, **dadurch gekennzeichnet, dass** die vom Maschinenparameter (PS, PW) abgeleitete Größe die Zerspanungsenergie pro Volumen ($J/mm^3$) ist, die zum Zer-

spanen eines vorgegebenen Volumens des abzutragenden Aufmaßes auf der Verzahnung oder auf dem Profil benötigt wird.

14. Verfahren nach einem der Ansprüche 1 bis 13, **dadurch gekennzeichnet, dass** aus den gemessenen Maschinenparametern (PS, PW) und/oder aus der vom Maschinenparameter (PS, PW) abgeleiteten Größe (A) ein Kennwert ermittelt und ausgegeben wird, der den Schleifprozess für das geschliffene Werkstück charakterisiert.

15. Verfahren nach einem der Ansprüche 1 bis 14, **dadurch gekennzeichnet, dass** das Schleifwerkzeug eine Schleifschnecke und das Werkstück ein Zahnrad ist.

**Claims**

1. Method for grinding a toothing or a profile of a workpiece by means of a grinding tool in a grinding machine,

   wherein the grinding tool is received on a tool spindle and the tool spindle is rotated by means of a first drive motor,
   wherein the workpiece is received on a workpiece spindle and the workpiece spindle is rotated by means of a second drive motor,
   wherein at least during the engagement of the grinding tool in the toothing to be ground or in the profile to be ground, a first and a second machine parameter (PS, PW) are measured and both measured machine parameters (PS, PW) or a variable (A) derived from the machine parameter (PS, PW) are compared with a predetermined stored value, wherein a signal is output if at least one of the machine parameters (PS, PW) or the variable (A) derived therefrom, taking into account a tolerance band, exceeds or falls below the predetermined stored value,
   **characterized in that** at least one of the machine parameters (PS, PW) or the variable (A) derived from this machine parameter (PS, PW) contains periodic signal components, wherein these signal components are broken down into the individual frequency components by a frequency analysis and the frequency components being used for comparison with regard to their frequency and/or their amplitude.

2. Method according to claim 1, **characterised in that** both machine parameters (PS, PW) or the variables (A) derived from these machine parameters (PS, PW) contain periodic signal components.

3. Method according to claim 1 or 2, **characterised in that** the frequency components are used for comparison only with regard to their amplitude.

4. Method according to one of claims 1 to 3, **characterised in that** the frequency analysis is performed by means of a Fast Fourier Transform (FFT).

5. Method according to one of claims 1 to 3, **characterised in that** the frequency analysis is performed by means of a Discrete Fourier Transform (DFT).

6. Method according to one of claims 1 to 3, **characterised in that** the frequency analysis is performed by a root mean square analysis (determination of the RMS spectrum) or by a determination of the amplitude spectrum or by a cepstrum analysis or by a compensation sinus function or by a determination of the auto power spectrum (PSD analysis).

7. Method according to one of claims 1 to 6, **characterised in that** the measurement of the first and second machine parameters (PS, PW) is performed during a predetermined time interval during grinding of the workpiece with the grinding tool.

8. Method according to one of claims 1 to 6, **characterised in that** the measurement of the first and second machine parameters (PS, PW) is carried out over a predetermined feed path during grinding of the workpiece with the grinding tool.

9. Method according to one of claims 1 to 8, **characterised in that** the first machine parameter (PS) is the power or current consumption of the motor of the tool spindle.

10. Method according to one of claims 1 to 9, **characterised in that** the second machine parameter (PW) is the power or current consumption of the motor of the workpiece spindle.

11. Method according to claim 9 or 10, **characterised in that** from the course of the total power or current consumption of the motor the course of the power or current consumption is subtracted which results in a grinding stroke without cutting of material or only with low cutting in a finishing grinding stroke.

12. Method according to one of claims 1 to 8, **characterised in that** one of the machine parameters is the structure-borne sound of the grinding machine or a part thereof, which is detected via a structure-borne sound sensor.

13. Method according to one of claims 1 to 11, **characterised in that** the variable derived from the machine parameter (PS, PW) is the cutting energy per volume

(J/mm$^3$) required to machine a predetermined volume of the allowance to be removed on the toothing or on the profile.

14. Method according to one of claims 1 to 13, **characterised in that** a characteristic value which characterises the grinding process for the ground workpiece is determined and output from the measured machine parameters (PS, PW) and/or from the variable (A) derived from the machine parameter (PS, PW).

15. Method according to one of claims 1 to 14, **characterised in that** the grinding tool is a grinding worm and the workpiece is a gear wheel.

## Revendications

1. Procédé permettant de meuler une denture ou un profil d'une pièce au moyen d'un outil abrasif dans une meuleuse,

dans lequel l'outil abrasif est reçu sur une broche porte-outil, et la broche porte-outil est mise en rotation par un premier moteur d'entraînement, dans lequel la pièce est reçue sur une broche porte-pièce, et la broche porte-pièce est mise en rotation par un deuxième moteur d'entraînement, dans lequel un premier et un deuxième paramètres de machine (PS, PW) sont mesurés au moins pendant la mise en prise de l'outil abrasif avec la denture à meuler ou le profil à meuler, et les deux paramètres de machine (PS, PW) mesurés ou une grandeur (A) dérivée du paramètre de machine (PS, PW) sont comparés avec une valeur mémorisée prédéfinie, dans lequel un signal est émis si au moins l'un des paramètres de machine (PS, PW) ou la grandeur (A) dérivée de ceux-ci dépasse ou soupasse la valeur mémorisée prédéfinie en tenant compte d'une marge de tolérance, **caractérisé en ce qu'**au moins l'un des paramètres de machine (PS, PW) ou de la grandeur (A) dérivée de ce paramètre de machine (PS, PW) contient des composantes de signal périodiques, dans lequel ces composantes de signal sont décomposées par une analyse de fréquence en composantes de fréquence individuelles, et les composantes de fréquence sont utilisées pour la comparaison concernant leur fréquence et/ou leur amplitude.

2. Procédé selon la revendication 1, **caractérisé en ce que** les deux paramètres de machine (PS, PW) ou les grandeurs (A) dérivées de ces paramètres de machine (PS, PW) contiennent des composantes de signal périodiques.

3. Procédé selon la revendication 1 ou 2, **caractérisé en ce que** les composantes de fréquence ne sont utilisées pour la comparaison que concernant leur amplitude.

4. Procédé selon l'une quelconque des revendications 1 à 3, **caractérisé en ce que** l'analyse de fréquence est effectuée au moyen d'une transformation de Fourier rapide (FFT).

5. Procédé selon l'une quelconque des revendications 1 à 3, **caractérisé en ce que** l'analyse de fréquence est effectuée au moyen d'une transformation de Fourier discrète (DFT).

6. Procédé selon l'une quelconque des revendications 1 à 3, **caractérisé en ce que** l'analyse de fréquence est effectuée par une analyse de valeur moyenne quadratique (détermination du spectre RMS) ou par une détermination du spectre d'amplitude ou par une analyse de cepstre ou par une fonction sinus d'égalisation ou par l'établissement d'une densité spectrale de puissance (analyse PSD).

7. Procédé selon l'une quelconque des revendications 1 à 6, **caractérisé en ce que** la mesure du premier et du deuxième paramètres de machine (PS, PW) est effectuée pendant un intervalle de temps prédéfini pendant le meulage de la pièce à l'aide de l'outil abrasif.

8. Procédé selon l'une quelconque des revendications 1 à 6, **caractérisé en ce que** la mesure du premier et du deuxième paramètres de machine (PS, PW) est effectuée sur un trajet d'avance pendant le meulage de la pièce à l'aide de l'outil abrasif.

9. Procédé selon l'une quelconque des revendications 1 à 8, **caractérisé en ce que** le premier paramètre de machine (PS) est la puissance ou le courant absorbé(e) du moteur de la broche porte-outil.

10. Procédé selon l'une quelconque des revendications 1 à 9, **caractérisé en ce que** le deuxième paramètre de machine (PW) est la puissance ou le courant absorbé(e) du moteur de la broche porte-pièce.

11. Procédé selon la revendication 9 ou 10, **caractérisé en ce que** l'on soustrait de la courbe de l'ensemble de la puissance ou du courant absorbé(e) du moteur la courbe de la puissance ou du courant absorbé(e) qui résulte pour une course de meulage sans enlèvement de copeaux de matière ou avec un faible enlèvement de copeaux seulement dans une course de meulage de finition.

**12.** Procédé selon l'une quelconque des revendications 1 à 8, **caractérisé en ce que** l'un des paramètres de machine est le bruit de structure de la meuleuse ou d'une partie de celle-ci, qui est détecté par un capteur de bruit de structure.

**13.** Procédé selon l'une quelconque des revendications 1 à 11, **caractérisé en ce que** la grandeur dérivée du paramètre de machine (PS, PW) est l'énergie d'enlèvement de copeaux par volume (J/mm$^3$) qui est nécessaire à l'enlèvement de copeaux d'un volume prédéfini de la surépaisseur à enlever sur la denture ou sur le profil.

**14.** Procédé selon l'une quelconque des revendications 1 à 13, **caractérisé en ce qu'**à partir des paramètres de machine (PS, PW) mesurés et/ou à partir de la grandeur (A) dérivée du paramètre de machine (PS, PW), une valeur caractéristique est établie et émise qui caractérise le processus de meulage pour la pièce meulée.

**15.** Procédé selon l'une quelconque des revendications 1 à 14, **caractérisé en ce que** l'outil abrasif est une vis sans fin de meulage et la pièce est une roue dentée.

Fig. 1

Fig. 2

**IN DER BESCHREIBUNG AUFGEFÜHRTE DOKUMENTE**

**In der Beschreibung aufgeführte Patentdokumente**

- WO 2020193228 A1